# EUROPÄISCHE PATENTANMELDUNG

(11) **EP 4 047 789 A1**
(43) Veröffentlichungstag der Anmeldung: **24.08.2022**
(21) Anmeldenummer: 21157795.2
(22) Anmeldetag: 18.02.2021
(51) Int. Cl.: H02K 3/18, H02K 9/22, H01F 5/06, H02K 3/52

(54) **THERMISCH VERBESSERTER ELEKTROMOTOR**

(71) Anmelder: Hilti Aktiengesellschaft, 9494 Schaan (LI)
(72) Erfinder: Schaefer, Thomas, 86836 Obermeitingen (DE)
(74) Vertreter: Hilti Aktiengesellschaft Corporate Intellectual Property

(57) **Zusammenfassung**

Elektromotor enthaltend eine Jocheinrichtung mit wenigstens einem ersten und zweiten Spulenträger, wobei der wenigstens erste und zweite Spulenträger zum Aufnehmen und Halten eines Spulendrahtes für eine Spulenwicklung dient.

In einer Nut zwischen dem wenigstens ersten und zweiten Spulenträger ist ein wärmeleitfähiges Material so enthalten/aufgetragen, dass der Spulendraht wenigstens teilweise durch das wärmeleitfähigen Material umschlossen ist.

## Beschreibung

Die vorliegende Erfindung betrifft einen Elektromotor enthaltend eine Jocheinrichtung mit wenigstens einem ersten und zweiten Spulenträger, wobei der wenigstens erste und zweite Spulenträger zum Aufnehmen und Halten eines Spulendrahtes für eine Spulenwicklung dient.

Aus dem Stand der Technik sind unterschiedlichste Elektromotoren bzw. E-Motoren weitestgehend bekannt. Die aus dem Stand der Technik bekannten Elektromotoren enthalten für gewöhnlich und im Wesentlichen einen Stator (auch Ständer genannt), einen Rotor (auch Läufer genannt), einer Antriebswelle sowie einen Kommutator. Darüber hinaus sind auch bürstenlose Elektromotoren ohne Kommutator bekannt. In diesen herkömmlichen Elektromotoren erzeugen stromdurchflossene Spulenwicklungen (oder nur Spulen genannt) Magnetfelder, deren gegenseitige Anziehungs- und Abstoßungskräfte in Bewegung umgesetzt werden. Die Spulenwicklungen zum Erzeugen eines Magnetfelds können in dem Stator und/oder Rotor vorhanden sein. Sowohl der Stator als auch der Rotor benötigen Spulenträger um die ein Spulendraht (für gewöhnlich Kupfer) zum Erzeugen der jeweiligen Spulen gewickelt wird.

Die Spulen von Elektromotoren, die unter anderem in elektrisch betriebenen Werkzeugmaschinen verwendet werden, sind oftmals starken Beschleunigungen oder anderen hohen mechanischen Belastungen ausgesetzt. Darüber hinaus neigen die Spulen in besonders leistungsstarken Werkzeugmaschinen (wie beispielsweise schwere Meißelhammer) relativ viel Wärme zu erzeugen. Um Beschädigungen bzw. technisch bedingte Ausfälle zu vermeiden, muss der Spulendraht der Spulen ausreichend fixiert werden sowie genügend viel Wärme ableiten können.

Zur Fixierung der Spulen werden unter anderem standardisierte Verfahren wie Träufeln, Tauchen, Tauchrollieren, Vergießen, Vakuumvergießen und Verbacken eingesetzt.
Mit der Ausnahme des Verfahrens Verbacken, sind diese Fixierungsverfahren der Spulen kostenintensiv. Des Weiteren weisen diese Fixierungsverfahren den Nachteil auf, dass die Windungen der Spulen die anfallende Wärme nicht effektiv aus der Stator oder Rotor abführen können.
Wiederum sind Spulen, die durch das Verfahren Verbacken fixiert werden, sind nur begrenzt widerstandsfähig gegenüber den Belastungen bei hohen Beschleunigungen oder anderen mechanischen Belastungen.

Aufgabe der vorliegenden Erfindung ist es daher, einen Elektromotor enthaltend eine Jocheinrichtung mit wenigstens einem ersten und zweiten Spulenträger, wobei der wenigstens erste und zweite Spulenträger zum Aufnehmen und Halten eines Spulendrahtes für eine Spulenwicklung dient bereitzustellen, der wenigstens die vorstehend genannten Probleme löst.

Die Aufgabe wird jeweils gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch einen Elektromotor enthaltend eine Jocheinrichtung mit wenigstens einem ersten und zweiten Spulenträger, wobei der wenigstens erste und zweite Spulenträger zum Aufnehmen und Halten eines Spulendrahtes für eine Spulenwicklung dient.

Erfindungsgemäß ist vorgesehen, dass in einer Nut zwischen dem wenigstens ersten und zweiten Spulenträger ein wärmeleitfähiges Material so enthalten/aufgetragen ist, dass der Spulendraht wenigstens teilweise durch das wärmeleitfähigen Material umschlossen ist.

Hierdurch wird eine thermische Anbindung zwischen dem Spulenträger und dem Spulendraht erhöht, sodass die in dem elektrisch durchflossenen Spulendraht erzeugte Wärme besser und schneller an den Spulenträger übertragen werden kann. Darüber hinaus wird der Spulendraht besser an dem Spulendraht fixiert, damit die Spulenwicklung widerstandsfähiger gegenüber auftretenden Beschleunigungen oder anderen mechanischen Belastungen ist.

Gemäß einer vorteilhaften Ausführungsform der vorliegenden Erfindung kann es möglich sein, dass das wärmeleitfähige Material eine Wärmeleitfähigkeit zwischen 0,8 W/mK und 1,5 W/mK aufweist und der Spulenträger wenigstens teilweise aus Polyamid besteht. Es ist auch möglich, dass anstelle des Polyamids ein anderes geeignetes Polymer Bestandteil des wärmeleitfähigen Materials ist.

Es ist darüber hinaus auch möglich, dass die vorliegenden Erfindung in einem Universalantrieb mit Isolationspapier Anwendung findet.

Entsprechend einer vorteilhaften Ausführungsform der vorliegenden Erfindung kann es möglich sein, dass bei einer verteilten Spulenwicklung des Spulendrahts und einem außen genuteten Spulenträger das wärmeleitende Material zu wenigstens 30% die Wicklungsauflagefläche des Spulenträgers benetzt/bedeckt.

Gemäß einer vorteilhaften Ausführungsform der vorliegenden Erfindung kann es möglich sein, dass bei einer verteilten Spulenwicklung des Spulendrahts und einem außen genuteten Spulenträger das wärmeleitende Material zu wenigstens 50% die Wicklungsauflagefläche eine Jocheinrichtung benetzt/bedeckt.

Entsprechend einer vorteilhaften Ausführungsform der vorliegenden Erfindung kann es möglich sein, dass bei einer unregelmäßig gewickelten Spulenwicklung des Spulendrahts und einem außen genuteten Spulenträger das wärmeleitende Material zu wenigstens 10% die Wicklungsauflagefläche der Jocheinrichtung benetzt/bedeckt.

Gemäß einer vorteilhaften Ausführungsform der vorliegenden Erfindung kann es möglich sein, dass bei einer unregelmäßig gewickelten Spulenwicklung des Spulendrahts und einem außen genuteten Spulenträger das wärmeleitende Material zu wenigstens 40% die Wicklungsauflagefläche des Spulenträgers benetzt/bedeckt

Entsprechend einer vorteilhaften Ausführungsform der vorliegenden Erfindung kann es möglich sein, dass zwischen 3% bis 20% von der Nut mit dem wärmeleitfähige Material gefüllt ist.

Gemäß einer vorteilhaften Ausführungsform der vorliegenden Erfindung kann es möglich sein, dass das wärmeleitfähige Material als Klebstoff auf Basis von Epoxidharz hergestellt ist.

Entsprechend einer vorteilhaften Ausführungsform der vorliegenden Erfindung kann es möglich sein, dass das wärmeleitfähige Material als Klebstoff auf Basis von Polyurethane hergestellt ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: einen Elektromotor mit einem Stator und Rotor;
- Figur 2: eine Frontansicht auf einen Stator mit mehreren Spulenträgern und Spulenwicklungen;
- Figur 3: eine Detailansicht auf den Spulenträger mit einem wärmeleitfähigen Material;
- Figur 4: eine Detailansicht auf den Spulenträger mit der Spulenwicklung und dem wärmeleitfähigen Material zu Beginn des Spulenwickelprozesses; und
- Figur 5: eine Detailansicht auf den Spulenträger mit der Spulenwicklung und dem wärmeleitfähigen Material am Ende des Spulenwickelprozesses.

### Ausführunasbeispiele:

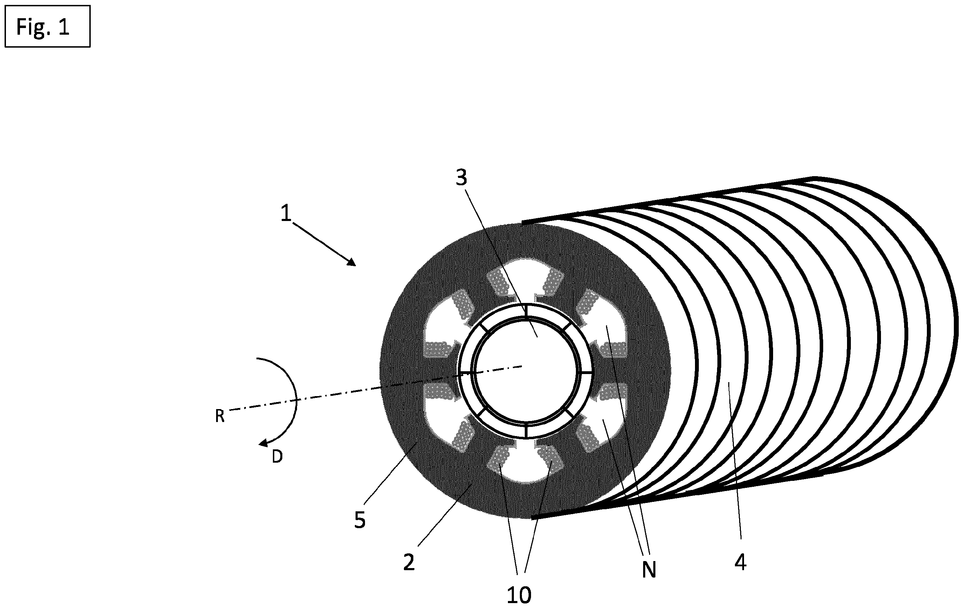

In Figur 1 zeigt einen Elektromotor 1 mit einem Stator 2 und einem Rotor 3. Der Rotor 3 ist dabei als Innenläufer im Inneren des Stators 2 positioniert. Gemäß einer alternativen Ausführungsform kann der Rotor 3 auch als Außenläufer um den Stator 2 herum positioniert sein. Zum Erzeugen eines Drehmoments dreht sich der Rotor 3 um die Drehachse R in Drehrichtung D relativ zum Stator 2.

Der Elektromotor 1 dient als Antrieb in einer Werkzeugmaschine. Bei der Werkzeugmaschine kann es sich um eine Bohrmaschine, Bohrhammer, Meißelhammer, Säge, Schleifgerät oder dergleichen handeln. Die Werkzeugmaschine ist in den Figuren nicht gezeigt.

Der Elektromotor 1 enthält dabei im Wesentlichen einen Stator 2, einen Rotor 3 und einen Kommutator.

Der Kommutator ist in den Figuren nicht gezeigt. Gemäß einer alternativen Ausführungsform ist der Elektromotor 1 als bürstenloser Elektromotor ohne Kommutator ausgestaltet.

Der Stator 2 ist durch eine Anzahl an Blechelementen 4 gebildet, vgl. Figur 1. Die einzelnen Blechelemente 4 sind zu einem Stapel aufgeschichtet, sodass ein zylindrisches Blechpaket bzw. ein Statorblechpaket gebildet wird.

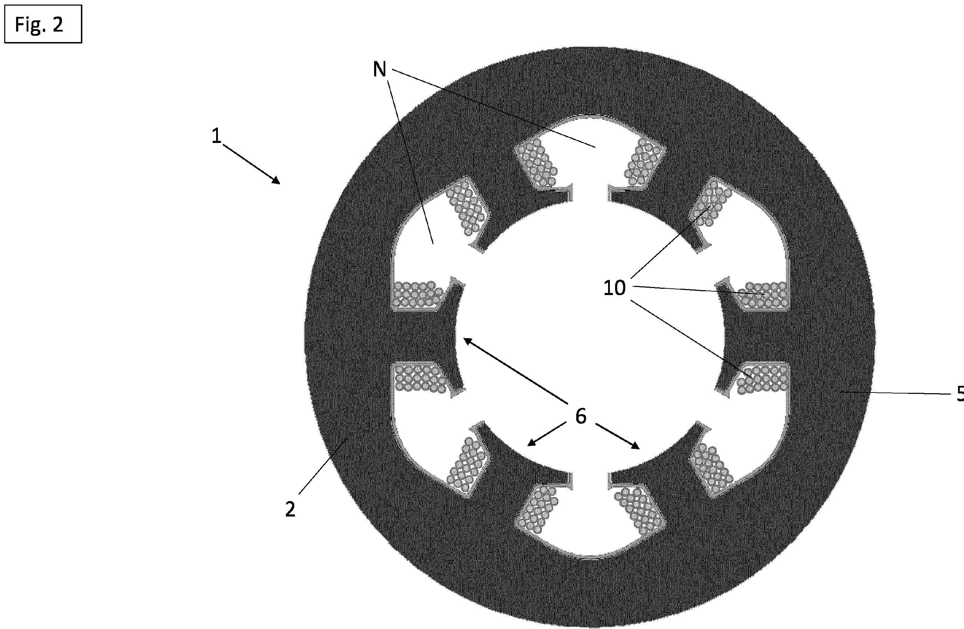

Wie in Figur 1 und 2 gezeigte enthält der als Blechpaket gebildete Stator 2 im Wesentlichen ein Jochelement 5 sowie sechs Spulenträger 6. Der Spulenträger 6 kann auch als Wicklungskörper bezeichnet werden. Das Jochelement 5 ist dabei als kreisrunder Ring ausgestaltet. An einer Innenseite des als Ring ausgestalteten Jochelements 5 sind die sechs Spulenträger 6 in gleichmäßigen Abständen und jeweils als Spulenträgerpaare gegenüberliegend positioniert. Zwischen jeweils zwei Spulenträgern 6 ist eine Nut N enthalten. In dem vorliegenden Ausführungsbeispiel, welche in den Figuren 1 und 2 gezeigt ist, sind drei Spulenträgerpaare, d.h. sechs Spulenträger 6, vorgesehen. Die Spulenträger 6 erstrecken sich dadurch radial in Richtung eines Mittelpunkts des Jochelements 5. Gemäß eines alternativen Ausführungsbeispiels können auch mehr oder weniger als sechs Spulenträger 6 enthalten sein.

In dem vorliegenden Ausführungsbeispiel ist der Spulenträger 6 als Einzelzahn bzw. Einzelzahnwickelkörper ausgestaltet. Gemäß alternativer Ausführungsbeispiele kann der Spulenträger 6 auch als innengenuteter, außengenuteter, rechteckiger und quadratischer Spulenträger 6 ausgestaltet sein.

Jeder Spulenträger 6 enthält wiederum jeweils einen Steg 7 und einen Polschuh 8.

Der Steg 7 kann auch als Zahn oder Polzahn bezeichnet werden, wobei jeder Steg 7 jeweils ein erstes Ende 7a sowie ein zweites Ende 7b enthält. Das zweite Ende 7b des Stegs 7 kann auch als Fuss bezeichnet werden. Wie in Figur 2 gezeigt ist der Polschuh 8 so an dem ersten Ende 7a des Stegs 7 positioniert, dass sich der Polschuh 8 quer zu dem Steg 7 erstreckt. Der Polschuh 8 enthält ein erstes Ende 8a sowie ein zweites Ende 8b, wobei das erste Ende 8a und das zweite Ende 8b den Steg 7 überragen. Das zweite Ende 7b des Stegs 7 ist an der Innenseite des Jochelements 5 positioniert.
Entlang dem ersten bzw. zweiten Ende 8a, 8b des Polschuhs 8, einer ersten und zweiten Außenseite 7c, 7d des Stegs 7 sowie dem Jochelement 5 ist angrenzend an einer ersten Seiten des Spulenträgers ein erster Füllraum 9a und angrenzend an einer zweiten Seite des Spulenträgers ein zweiter Füllraum 9b gebildet. Der erste oder zweite Füllraum 9a, 9b kann auch als Wickelraum bezeichnet werden.

Der erste Füllraum 9a neben der ersten Seite 6a des Spulenträgers 6 und der zweite Füllraum 9b neben der zweiten Seite 6b des Spulenträgers 6 dient zur Aufnahme eines Spulendrahts 10. Der Spulendraht 10 kann auch als elektrischer Leiter, isolierter Draht oder Litze bezeichnet werden und dient als Spule gewickelt ein Magnetfeld zu erzeugen.

Der Spulendraht 10 ist dabei aus Kupfer hergestellt. Alternativ kann der Spulendraht 10 auch aus einer Kupferlegierung oder einer anderen Legierung hergestellt sein. Der Spulendraht 10 in dem vorliegenden Ausführungsbeispiel weist eine kreisrunde Querschnittsfläche auf. Gemäß eines alternativen Ausführungsbeispiels kann der Spulendraht 10 auch eine flache-, ovale- oder quadratische Querschnittsfläche aufweisen.

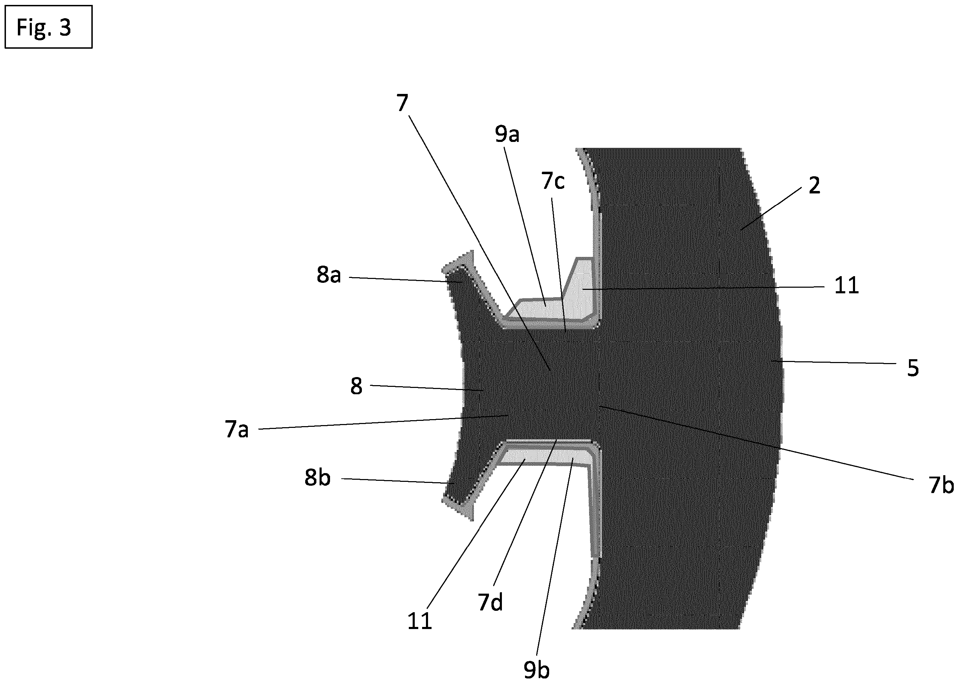

In den Figuren 3 bis 5 ist sind die einzelnen Schritte des Wickelprozesses zum Erzeugen der Spulenwicklung dargestellt.

Zum Erzeugen einer Spule bzw. Spulenwicklung für den erfindungsgemäßen Elektromotor 1 wird zunächst ein wärmeleitfähiges Material 11 um bzw. auf den Steg 7 des Spulenträgers 6 aufgetragen. Wie in Figur 3 ersichtlich wird auf der ersten Seite 6a des Spulenträgers 6 eine größere Menge an wärmeleitfähigen Material 11 aufgetragen als auf der zweiten Seite 6b des Spulenträgers 6.

Das wärmeleitfähige Material 11 in dem dargestellten Ausführungsbeispiel ist in Form eines Klebstoffs auf Basis eines Epoxidharzes ausgeführt. Alternativ kann das wärmeleitfähige Material 11 als Klebstoff auf Basis von Polyurethane oder dergleichen hergestellt sein. Das wärmeleitfähige Material 11 wird in einem flüssigen Zustand auf den Steg 7 des Spulenträgers 6 aufgetragen.

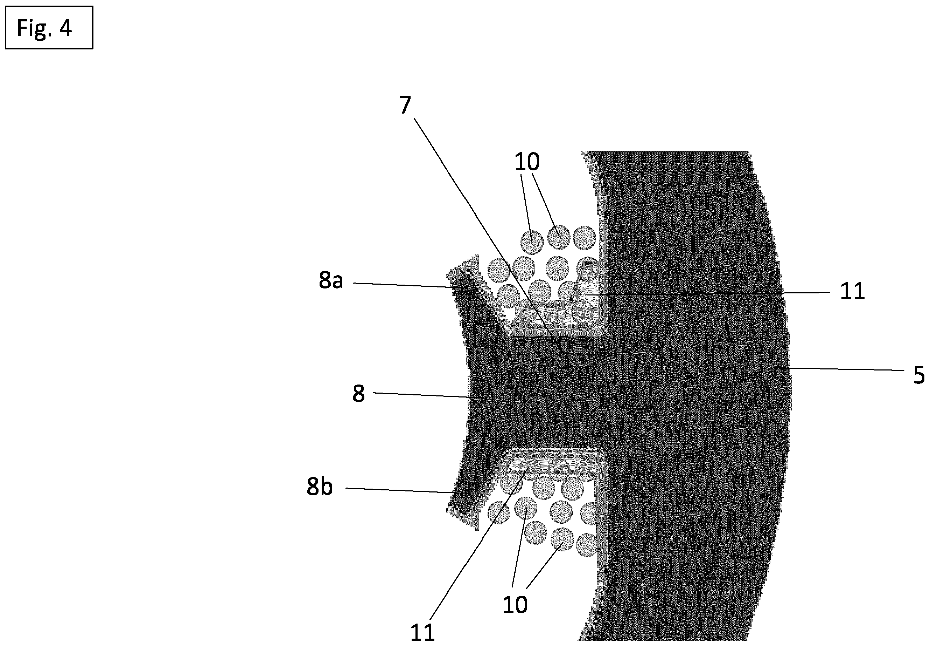

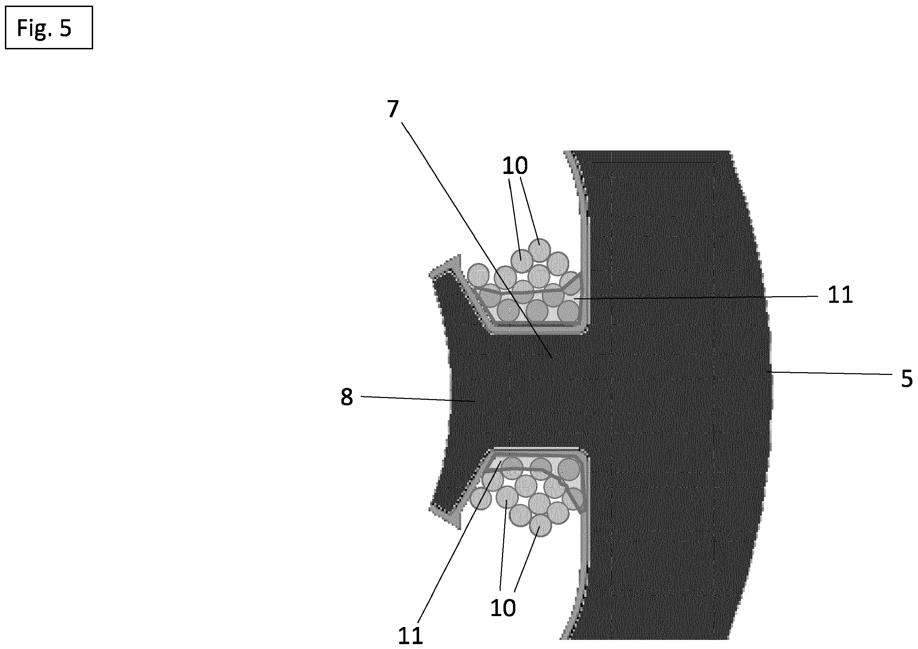

Anschließend und bevor das wärmeleitfähige Material 11 schon vollständig erstarrt ist (d.h. ein fester Körper geworden ist), wird der Spulendraht 10 mit Hilfe einer bestimmten Spulenwickeltechnik in mehreren Lagen um den Steg 7 des jeweiligen Spulenträgers 6 gewickelt, vgl. Figur 4.
Der Spulenwickelprozess startet dabei an der ersten Seite 6a des Spulenträgers 6, sodass der Spulendraht 10 zuerst an der Seite des Spulenträgers 6 mit der größeren Menge an wärmeleitfähigen Material 11 angelegt wird. Das Wickeln des Spulendrahts 10 erfolgt somit in Uhrzeigerrichtung.
Durch das Anlegen des Spulendrahts 10 zuerst an der ersten Seite 6a des Spulenträgers 6 wird die größere Menge an wärmeleitfähigen Material 11 entlang des Stegs 7 des Spulenträgers 6 gedrückt und aufgetragen.
Hierdurch kann beim Wickeln des Spulendrahts 10 gleichzeitig die wärmeleitfähige Material 11 relativ gleichmäßig an dem Steg 7 verteilt werden.
Wie in Figur 4 und 5 ersichtlich wird durch den Wickelprozess der Spulendraht 10 in das wärmeleitfähige Material 11 gedrückt, sodass der Spulendraht 10 von dem wärmeleitfähigen Material 11 umschlossen bzw. Hohlräume zwischen dem gewickelten Spulendrähten 10 durch das wärmeleitfähige Material 11 aufgefüllt sind.

In Figur 5 ist der Zustand am Ende des Wickelprozesses dargestellt, wobei der Spulendraht 10 relativ fest bzw. eng um den Steg 7 des Spulenträgers 6 gewickelt ist. Das wärmeleitfähige Material 11 umschließt dabei nicht vollständig den Spulendraht 10, sondern lediglich eine ersten und zweite Bahn (oder Wickelschicht) des Spulendrahts 10.

Entsprechend einer alternativen Ausführungsform der vorliegenden Erfindung kann auch eine größere Menge an wärmeleitfähigen Material 11 an den Steg 7 des Spulenträgers 6 vor Beginn des Wickelprozesses aufgetragen werden, sodass ein höherer Anteil (d.h. mehr Bahnen bzw. Wickelschichten) des Spulendrahtes 10 von dem wärmeleitfähigen Material 11 umschlossen sind und alle Hohlräume in der Spulenwicklung ausgefüllt sind.

In dem vorliegenden Ausführungsbeispiel wird eine Standardwickeltechnik zum Erzeugen einer wilden Spulenwicklung verwendet.

Entsprechend einer alternativen Ausführungsform kann aber auch eine Lagen-, Schablonen-, Linear-, Nadel-, Flyer-, Hairpin-, Direktwickeltechnik zum Erzeugen der Spulenwicklung verwendet werden.

Anstelle der wilden Spulenwicklung bzw. wilden Spulenform kann auch eine konzentrierte, verteilte, orthozyklische, schraubenförmigen, pilgerschritt, bifilare, mehrdrahtige, Kreuz-, Lücken, konvexe, konische oder konkave Spulenwicklung bzw. Spulenform erzeugt werden.

### Bezuaszeichen:

- 1: Elektromotor
- 2: Stator
- 3: Rotor
- 4: Blechelement
- 5: Jochelement
- 5a: Innenseite des Jochelements
- 6: Spulenträger
- 6a: erste Seite des Spulenträgers
- 6b: zweite Seite des Spulenträgers
- 7: Steg
- 7a: erstes Ende des Stegs
- 7b: zweites Ende des Stegs
- 7c: erste Außenseite des Stegs
- 7d: zweite Außenseite des Stegs
- 8: Polschuh
- 8a: erstes Ende des Polschuhs
- 8b: zweites Ende des Polschuhs
- 9a: erster Füllraum
- 9b: zweiter Füllraum
- 10: Spulendraht
- 11: wärmeleitfähiges Material
- N: Nut
- R: Drehachse
- D: Drehrichtung

## Patentansprüche

1. Elektromotor (1) enthaltend eine Jocheinrichtung (5) mit wenigstens einem ersten und zweiten Spulenträger (6), wobei der wenigstens erste und zweite Spulenträger (6) zum Aufnehmen und Halten eines Spulendrahtes (10) für eine Spulenwicklung dient
**dadurch gekennzeichnet, dass** in einer Nut (N) zwischen dem wenigstens ersten und zweiten Spulenträger (6) ein wärmeleitfähiges Material (11) so enthalten/aufgetragen ist, dass der Spulendraht (10) wenigstens teilweise durch das wärmeleitfähigen Material (11) umschlossen ist.

2. Elektromotor (1) nach Anspruch 1,
**dadurch gekennzeichnet, dass** das wärmeleitfähige Material (11) eine Wärmeleitfähigkeit zwischen 0,8 W/mK und 1,5 W/mK aufweist und der Spulenträger (6) wenigstens teilweise aus Polyamid besteht.

3. Elektromotor (1) nach Anspruch 1 oder 2,
**dadurch gekennzeichnet, dass** bei einer verteilten Spulenwicklung des Spulendrahts (10) und einem außen genuteten Spulenträger (6) das wärmeleitende Material (11) zu wenigstens 30% die Wicklungsauflagefläche des Spulenträgers (6) benetzt/bedeckt.

4. Elektromotor (1) nach Anspruch 1 oder 2,
**dadurch gekennzeichnet, dass** bei einer verteilten Spulenwicklung des Spulendrahts (10) und einem außen genuteten Spulenträger (6) das wärmeleitende Material (11) zu wenigstens 50% die Wicklungsauflagefläche eine Jocheinrichtung (5) benetzt/bedeckt.

5. Elektromotor (1) nach Anspruch 1 oder 2,
**dadurch gekennzeichnet, dass** bei einer unregelmäßig gewickelten Spulenwicklung des Spulendrahts (10) und einem außen genuteten Spulenträger (6) das wärmeleitende Material (11) zu wenigstens 10% die Wicklungsauflagefläche der Jocheinrichtung (5) benetzt/bedeckt.

6. Elektromotor (1) nach Anspruch 1 oder 2,
**dadurch gekennzeichnet, dass** bei einer unregelmäßig gewickelten Spulenwicklung des Spulendrahts (10) und einem außen genuteten Spulenträger (6) das wärmeleitende Material (11) zu wenigstens 40% die Wicklungsauflagefläche des Spulenträgers (6) benetzt/bedeckt

7. Elektromotor (1) nach wenigstens einem der Ansprüche 1 bis 6,
**dadurch gekennzeichnet, dass** zwischen 3% bis 20% der Nut (N) mit dem wärmeleitfähige Material (11) gefüllt ist.

8. Elektromotor (1) nach wenigstens einem der Ansprüche 1 bis 7,
**dadurch gekennzeichnet, dass** das wärmeleitfähige Material (11) als Klebstoff auf Basis von Epoxidharz hergestellt ist.

9. Elektromotor (1) nach wenigstens einem der Ansprüche 1 bis 8,
**dadurch gekennzeichnet, dass** das wärmeleitfähige Material (11) als Klebstoff auf Basis von Polyurethane hergestellt ist.
